# EUROPEAN PATENT SPECIFICATION

(11) **EP 1 231 285 B1**
(45) Date of publication and mention of the grant of the patent: **17.09.2003**
(21) Application number: 98959917.0
(22) Date of filing: 17.12.1998
(51) Int. Cl.: C22B 3/20, B01D 21/02

(54) **PROCESS AND EQUIPMENT FOR THE SEPARATION OF GOLD PARTICLES**
VERFAHREN UND VORRICHTUNG ZUM TRENNEN VON GOLDTEILCHEN
PROCEDE ET EQUIPEMENT PERMETTANT DE SEPARER LES PARTICULES D'OR

(43) Date of publication of application: 14.08.2002
(73) Proprietor: Castro Gomez, Luis, 36201 Vigo (ES)
(72) Inventor: Castro Gomez, Luis, 36201 Vigo (ES)
(74) Representative: Maldonado Jordan, Julia
(86) International application number: ES9800345
(87) International publication number: WO00036166

## Description

### PURPOSE OF THE INVENTION

The method and equipment described herein apply to the separation of particles of gold and other dense minerals contained in clays and various types of soil or slurry, and therefore fits into the mining sector. However, it may be applicable to some water treatments and also to industrial processes.

### BACKGROUND OF THE INVENTION

The Romans separated gold from clays and various types of soil or slurry by passing material removed from quarries or pools, dissolved in abundant amounts of water, through sluices with barriers or crossbars in the bottom, where gold particles with volumes larger than 1 µgr, or more, according to their shape, were deposited. The "galimpeiros" of Brazil still use this method. Currently, when the proportion of the smallest particles is appreciable, the cyanide method is also used, which consists of dissolving the gold with cyanide, generally sodium cyanide, and later precipitating the gold from the solution. The drawback of this method is its danger, because of the toxicity of the cyanide ion, and because of the pollution of wastewater and land that is treated.

The invention concerns a method and an equipment for separating particles of gold as given in claims 1 and 4.

### DESCRIPTION OF THE INVENTION

The clays, soils or slurry that contain gold or other materials to be separated are uniformly mixed with a sufficient amount of water, in a ratio of 20-160 liters of water for each Kilogram of dry soil, in a continuous process, in other words, a flow of clay with a much larger flow of water. This flow of thin slurry is passed through a sieve with mesh openings of 120 µm per side, approximately, to separate particles of a larger size that might cause problems at later stages. The particles of a larger size that are separated from the flow may be separated from each other by densities using cyclones or shaking or vibrating tables, or any other procedure in use.

The liquid that passes through the sieve continues to be shaken along its route to a three-outlet separator, in which the three following fractions are separated:
1^{st} - Water that is more or less clear, with very fine particles.
2^{nd} - Slurry that is more concentrated than the slurry that entered, with almost all the unsedimented particles.
3^{rd} - Sedimented particles, among which are found the gold and other high-density materials, as well as low-density particles and larger sizes and other smaller ones that were swept along, as well as some slurry from the 2^{nd} fraction.

To obtain these three fractions, it is necessary to adjust the time the slurry stays in the separator, in other words, the volume/input flow volume ratio, in order to achieve slow settling appropriate to the characteristics of the particles to be separated and those of the clays, soils or slurry that contain them; this should be done on an experimental basis in each case, to achieve the maximum financial yield from the sedimentation, in other words, the maximum sedimentation of the gold and other interesting particles before the sedimentation of the clay and other particles prevents it.

The 1^{st} fraction's proportion is usually less than 30% of the volume entering, and the 3^{rd} fraction's proportion is variable; it may be much less than 1%, as in the case of separating gold from clay without sand, for example. If, in addition, the clays are fine, less than 7 µm, the very fine particles of gold and other dense materials can be separated. In the case of gold, particles of from 80 picograms (2 µm in diameter) to 20 nanograms would be separated, according to their shapes.

The concentration of gold and other materials in the 3^{rd} fraction may range from 20 times more than in the source material, excluding the water, to more than 1000 times, depending on the sizes and shapes of the different materials and the way the process is managed in order to achieve the maximum separation of dense materials (gold and others). If the size of the dense materials is very fine or the proportion of fine, dense materials is very high, this method may not be appropriate. Such is the case of separating gold that appears among some quartzites, in transparent laminae of less than 5 mm² and thicknesses of few A ⁰(10⁻¹⁰ m), which sediment slowly in the air, and in general all particles whose gold mass is lower than 80 pgr.

Using this procedure, quartz sands and materials of like density can also be separated from the clays. If we start with screening at 120 x 120 µm², sands of a diameter equivalent to 50% greater than that of the clay or soil can be separated, for sedimentation rate purposes (clay of 17 microns and sand of 25 microns).

As 20 to 160 liters of water per Kg. of dry soil, depending on its particle size, are needed to achieve sedimentation of the gold without impediment, water management in this process may be a problem. Applied to the mining operations in the mud at the bottom of the Amazon and its tributaries, it is not a problem; but to apply it in a populated region, with limited water resources and with strict regulations as far as discharges are concerned, the following are necessary:
- To recover as much water as possible.
- That the wastewater have the same composition as the intake water (and therefore the same pH and clarity).

The water that comes out of the three-outlet separator is not clear, as the sedimentation that takes place in it requires the absence of flocculants, but that water contains only clay particles smaller than 1 µm in diameter and organic material residues, in proportions of less than 50 parts per million, and so therefore can be used to directly dissolve other clays, without any kind of treatment; but in this separator less than 1/3 of the water is recovered, and therefore it is necessary to recover the water that comes out with the clay in the 2^{nd} fraction of the three-outlet separator, and other waste water.

The most suitable way to recover the water from the 2^{nd} fraction is to place a two-outlet separator, in which clear water comes out from one part and slurry with an apparent density of 1.3 to 1.5 from the other, next to the three-outlet unit. If it came out at 1.4, 50% more of the total water would be recovered, and 5 to 40 liters of water/kg. of soil would be unrecovered; these would go to restoration basins, from which a part can be recovered directly from the surface, another part would go to springs and natural or artificial channels by filtration, from which recovery can also be made, and another part would evaporate or would remain for some time as moisture in the clay. Thus the new water necessary for the process could be between 1 and 3 liters per kg. of dry clay, which can easily be assumed.

Let us imagine a sediment bank that contains clays and gold that is not separable with barriers, as well as 1 kg./Tm. of sedimentable sand which cannot be separated by screening, and that the particle size of the gold and the clay allows them to be separated. 1 Tn of material would have to be mixed with the recovered water, plus 2 m³ of fresh water, and uniformly dissolved. A concentrate could be obtained with the gold plus 1 kg. of sand, plus approximately 3 liters of thin slurry, a total of 4.5 kg. of concentrate from which the gold and sand are easily separated from the slurry by any procedure, but dealing with a concentrate with a gold content of 500 to 1000 times greater, dry, than in the source material. This would allow this method to be applied as long as there were 0.10 gr. of gold per Tm. of dry mud, or to be applied to the slurry dumped by the "galimpeiros" in a complementary process, as long as they have 0.08 gr./Tn of dry mud. If starting with dry clays, the limit for exploitation would be from 0.15 to 0.3 gr./Tn of dry clay, according to local conditions, which makes this method interesting in those cases where the particles of gold or other materials are very fine and other more costly or polluting methods cannot be applied.

To do this, a three-outlet separator is used, in which there is a plurality of parallel plates, separated from each other by a few millimeters, defining considerably flattened cells, also parallel, whose placement is slanted with respect to horizontal, on the order of 60°, and which are considerably elongated vertically and whose upper edge is also slanted, receiving the product to be treated through the lowest area of their upper end; the outlet for the 1^{st} fraction is established on the highest area of said upper end, with the outlet for the second fraction being established at the level of the highest area of its lower end, through a collector that connects the outlet areas between plates and that has a rising extension so that its discharge mouth is located on the high area, but slightly below the outlet for the 1^{st} fraction, while the 3^{rd} fraction falls through the lowest area of the bottom end of the aforementioned plates, towards a collection hopper or series of hoppers whose outlets are sufficiently constricted, and the amount of time the product stays in the separator is on the order of ½ to 4 minutes.

The water corresponding to the 1^{st} fraction is reusable in the process itself, while the second fraction will preferably be subjected, after its discharge, to a new phase of settling, to get its original density, which may be on the order of 1.05, to a density of at least 1.3, in order to allow this mud to be returned to the bottom of the river and not be swept away by the water, or restored to basins in the quarry.

### DESCRIPTION OF THE DRAWINGS

To complement this description and for the purpose of allowing for better understanding of the characteristics of the invention, in accordance with the example of its preferred embodiment, a set of drawings of an illustrative and non-restrictive nature, in which the following items are represented, is attached as an integral part of this description:
Figure 1 - Shows a diagram corresponding to the method for separating gold particles which is the purpose of this invention.
Figure 2 - Shows, also according to a schematic representation, the configuration of one of the cells to be formed by means of the aforementioned parallel plates, in which its working position is seen in relation to the axes of a system of Cartesian coordinates.
Figure 3 - Shows a perspective schematic representation of several plates, a multiple of those in the previous figure, to achieve several parallel arrangements of cells.
Figure 4 - Shows a schematic detail of one of the plates or cells of the previous figure, which in this case have a corrugated outline instead of a broken one, at the level of the parts that act as baffles for the particles at the peaks of the plates.
Figure 5 - Shows a cross-section detail of one of the distributing pipes for the product to be treated.
Figure 6 - Shows a cross section detail of one of the collector pipes for collecting the second fraction.
Figure 7 - Shows a battery of cells similar to the one in figure 3, to which the distributor and collector pipes of figures 5 and 6 are connected.
Figure 8 - Shows, according to a perspective schematic representation, a settling module like one in the previous figure, with its corresponding frame and outlet hopper for the 3^{rd} fraction.
Figure 9 - Shows a front elevation schematic representation of a pair of modules like the one in the previous figure.
Figure 10 - Shows a perspective schematic representation similar to the one in figure 8, in which the settling module is seen connected to the auxiliary settling module, to increase the density of the slurry that makes up the 2^{nd} fraction.

### PREFERRED EMBODIMENT OF THE INVENTION

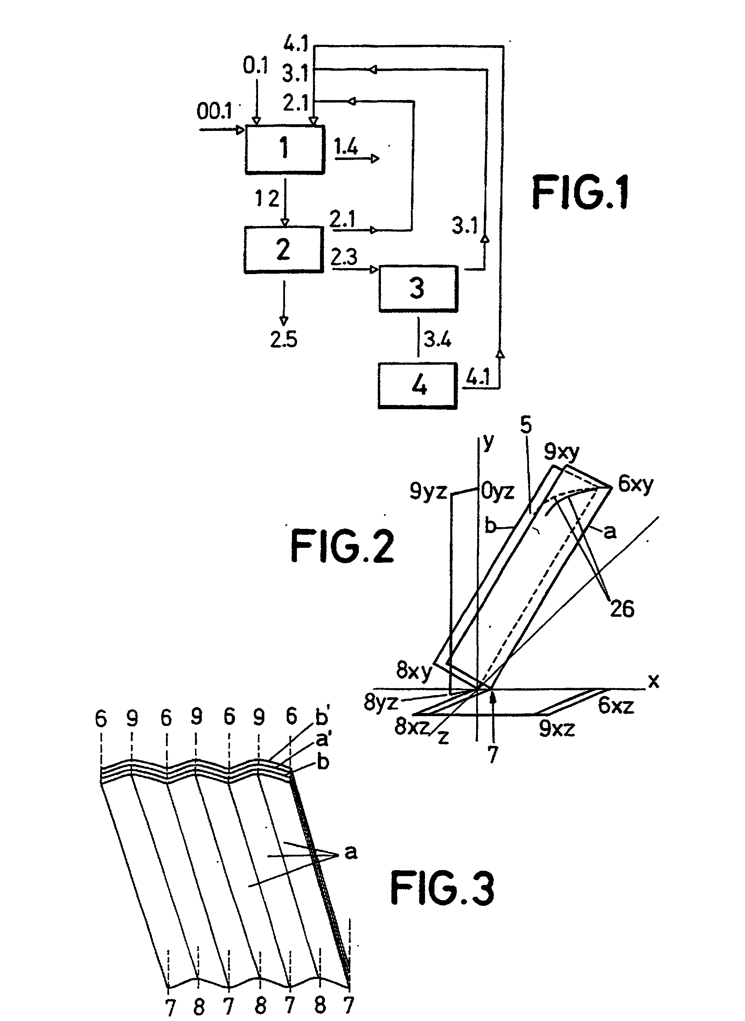

In view of the figures described, and specifically figure 1, it can be seen that putting the suggested method into practice begins with a mixing and shaking station (1), in which the mud or the clay (0.1), preferably in the form of shavings and sieved at approximately 120 x 120 µm², is introduced, obtaining some large solids (1.4) which are separated and treated through conventional means, while the sieved product (1.2) is transported towards the separator (2), which will be described further on.

The three fractions which have previously been mentioned come out of said separator (2), specifically the 1^{st} fraction (2.1), basically consisting of water, which is recycled to the mixing and shaking station (1); the 2^{nd} fraction (2.3), which is transported towards a separator (3) which in turn has two outlets, one outlet (3.1) for turbid water, which is also retransported to the mixing and shaking station (1), and a dense slurry (3.4) which may be eliminated or may be transported to a restoration basin (4), from which water (4.1) is also obtained, likewise restored to the mixing and shaking station; while the 3^{rd} fraction (2.5) corresponds to the particles of gold and other heavy product.

More specifically, clay is removed from a bank, dry, and is milled in such a way as to obtain shavings a few millimeters, preferably from 1 to 3, thick, and if possible fragmented at the same length, which makes the process of dissolving them in the large amount of water necessary faster and more reliable, or is removed from the bottom of a river and water is added to it, and it is shaken. The dissolved material may be passed through a vibrating sieve (1) with openings of approximately 120 µm. The separated material is swept away with water to a shaking table, where the gold and other dense particles are separated from each other and from the sand. The sieved material is transported to the three-outlet separator (2), which may be fixed or mobile, moving on trolleys or wheels or floating, and near the startup point and the restoration basins, according to the size and shape of the deposit. The 3^{rd} fraction from the three-outlet separator (2), with a greater concentration of gold, is removed from the bottom of the separator with an air or water ejector, or a drag chain, and goes to other equipment where the gold and other large particles are separated from each other and from the light, fine discardable particles, either at the same exploitation facility or at a separate factory. Dissolving can take place after sieving if starting with liquid slurry.

The three-outlet separator (2) is made up of a battery of parallelepipedical cells (5) a few millimeters thick by several centimeters wide and several decimeters high, with the largest dimension slanted some 60° with respect to horizontal and an average approximate slant of the medium dimension of some 20° ± 10° with respect to horizontal, as seen in figure 2, which represents the projections of a cell on three orthogonal planes defined by axes x, y and z. The cells in the batteries are open on the four narrow faces and closed by two flat surfaces or plates, either broken or corrugated (a) and (b), in which (6) is the input area for the material to be separated, (7) is the outlet area for the jagged material, (8) is the outlet area for the slurry that is more concentrated than the slurry going in, and (9) is the outlet area for the water that is clearer than the water going in. The narrow, longer faces are next to others in cells that are symmetrical with respect to planes parallel to the xy plane, whose function is the same and which do not need to be closed, except on the ends of the battery that are closed. The subindices indicate the planes on which the corners of slanted plates (a) and (b) are projected.

As the slurry goes into the intake (6), corresponding with the lowest point of the cells (5) defined between plates (a) and (b), it tends to spread out horizontally, according to the surface indicated by the lines (26) in figure 2, and because of its lower average density than that of the slurry which is below, it will begin to lose water (which in turn is lower in density), which tends to rise until reaching area (9), where it goes out, while the sediments, because of their greater density, tend to descend along the cell (5) and due to the latter's markedly slanted position, the densest ones tend to gather on its bottom edge, and the least dense ones on its upper edge, so that the least dense ones, the unsedimented clay and clay with water, go out through outlet (8), while the densest and most sedimented materials, among which is the slurry, go out through outlet (7).

For the installation to work properly, it is necessary to regulate the flows of the three aforementioned outlets. The outflow at (7) goes freely to a lower hopper (20) with one or more outlets, with flow volumes controlled by ejectors or by whatever equipment is used for that purpose. The outflow at (8), which has the greatest volume, has a section that will be calculated in each case and is regulated by the difference in level between the 1^{st} and the 2^{nd} fraction, so that the higher the outflow level (9) of the 1^{st} fraction, the smaller said relative volume will be and the larger that of the 2^{nd} fraction. The objective is for the water from the 1^{st} fraction to be directly reusable and in the greatest amount possible, and above all for it not to take up the usable space of the cells or batteries of cells.

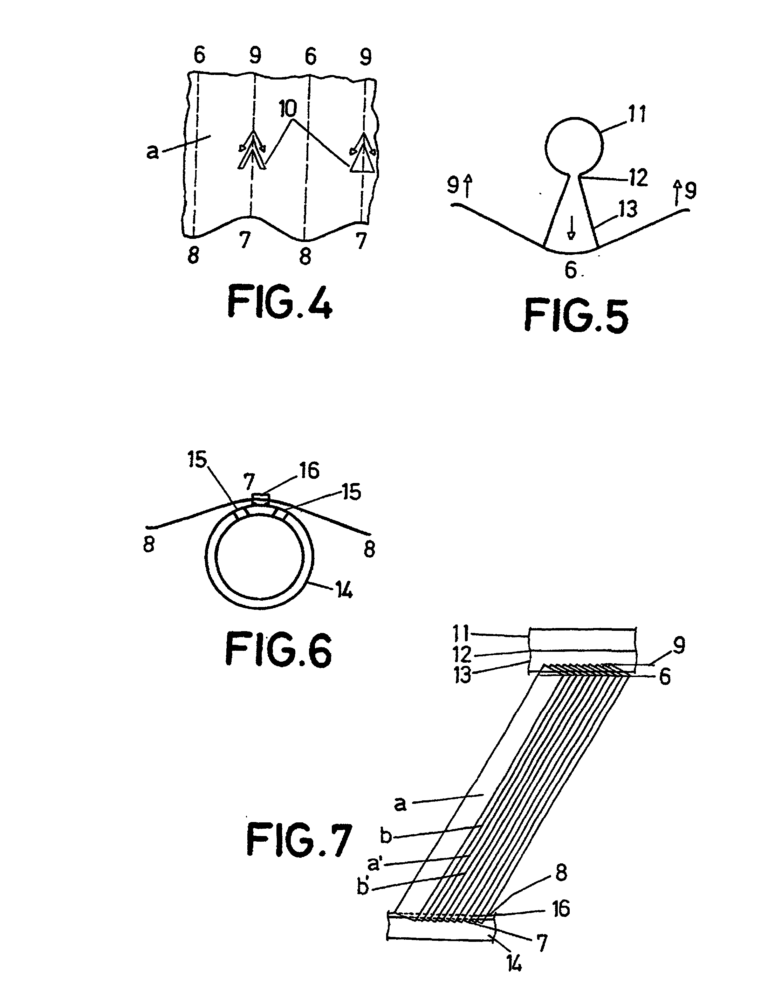

If the separating plates of the cells are sinusoidal in shape, shown in figure 4, the sedimented material that reaches them in the peak generatrix areas (6-7) will either fall towards the sides or follow the peak down and may reach outlet (7). To avoid this, some cm. above outlet (7) a triangular or angular piece (10) is joined to all the peaks; its thickness is approximately equal to 40% of the separation between the plates, so the bisectrix coincides with the generatrix of the sinusoidal surface, as seen in figure 4, which is a perspective view, in which (10) shows the joined pieces that appear in the shape of an angle and triangle. The active angle should be less than 60°. In the figure, the arrows indicate the routes that the sedimented particles may take to outlet (8), going away from (7).

For the battery to work correctly, the mixture to be separated must remain for the same amount of time in all the cells, so the same flow must arrive at and leave each cell, with no cells giving or receiving anything from the ones that immediately share the open faces (9-8) or (6-7). In addition, in the cases where the intake mixture is flocculant, it should be recently shaken when it arrives at the distributor, so that it stays as long as possible in the cells without settling and without flocculating the slurry (clays or other soils).

Figure 5 shows a cross section of one of the distributing pipes that are placed on the parallel arrangements of the areas marked (6) where the mixture to be settled enters, where (11) is a pipe that distributes the mixture to be settled, (12) is a slot or series of perforations allowing the mixture to go out, (13) is a diffuser whose purpose is to reduce the outgoing speed of the mixture, which if it arrived at area (9) at high speed would reduce the effectiveness of the separator. The mixture arrives at area (9) at a speed that is approximately double the descending speed in the cells. Slot (12) is narrow enough, with a loss of pressure that is relatively high with respect to the losses along the route through the pipes, to achieve a uniform flow volume by unit of length and cell, which is necessary. These distributors also separate the turbid mixture that enters through the areas marked (9), to the separator, from the clear or turbid water that comes out of the areas marked (6).

Figure 6 shows a cross section of a pipe (14) with perforations (15), one for each cell, all the same, and small enough to achieve an equal flow volume in all the cells, and a long piece (16) joined to the pipe (14) to support in its transverse slots the areas marked (7) of plates (a) and (b) that delimit the cells (5).

Figure 7 is a side view of a battery from figure 1 cut on an xy plane, in which the numbers representing the parts are the same as in the other figures. It can be seen that the plane of the parallel arrangements (9) is the highest, (6) is lower, (7) the lowest and (8) is higher, and that the folded or corrugated plates (a) and (b) rest in the slots on piece (16). On the upper part, the spacers and supports for the plates may be plugs made of rubber, plastic or some other material, or chains, in the areas marked (9).

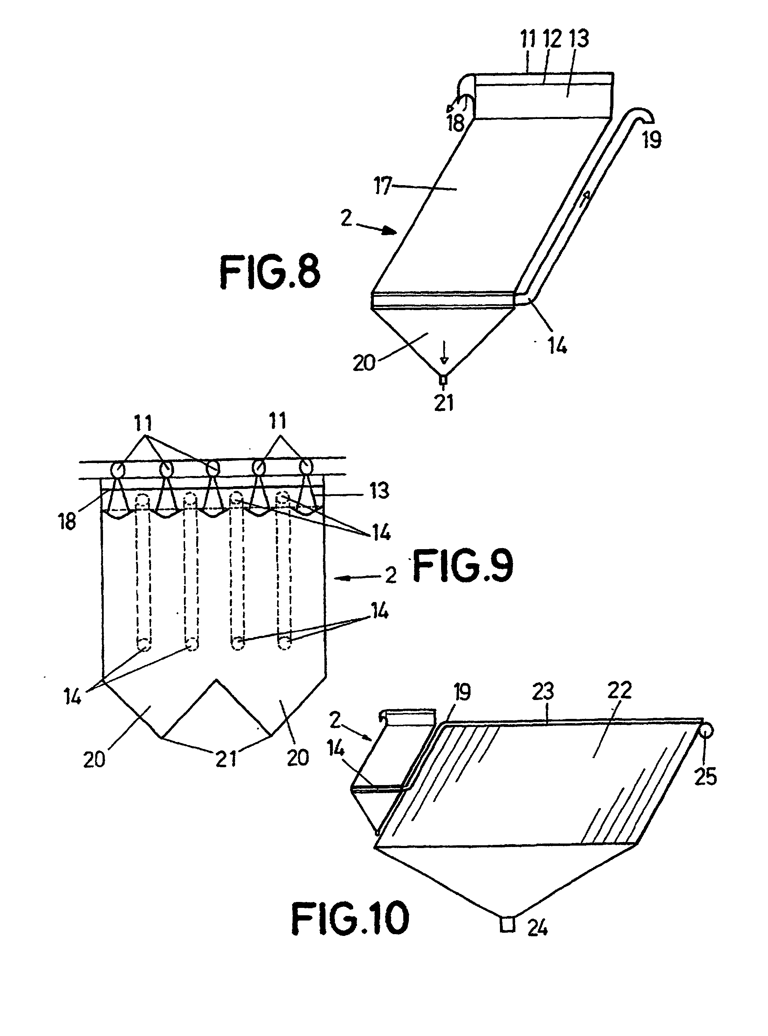

Figure 8 is a side view of the receptacle containing the battery, where in addition to the parts previously described, we have the frame (17) which houses plates (a) and (b), the spout (18), whose level can be regulated, for the clear or turbid water, the outlet (19), whose level can also be regulated, for the collector pipes (14) for the mixture that comes out of the areas marked (8) from the cells (5), and the hopper (20) for collecting sedimented materials that are discharged through one or several outlets (29), continuously or intermittently, trying to ensure that the hopper is full of sedimented materials so that few fine particles go out with them.

Figure 9 is a front view of the same container on a smaller scale, in which several intake pipes for the mixture (11) can be seen, with their diffusers (13) and several outlet pipes for the slurry (14), as well as two hoppers (20) and settling outlets (21). The spout (18) may be on the face that is seen or on the back face.

This container (17) may be made out of reinforced concrete, metal, plastic or other materials. The lines that represent it in the figures correspond to its internal faces. It can be used either buried, submerged, aerially, or a combination of these, according to local conditions.

One advantage of this separator is that it has three outlets. If it did not have outlet (9) for water that is more or less turbid, the separator would be almost filled with water, as the water inevitably separates, and the slurry would go right out through outlets (7) and (8) without having time to settle. Another advantage is due to the great uniformity in its operation as the same flow volume of the mixture to be separated reaches and leaves each cell; and finally, the most important advantage is that the four different flows neither mix with either other or cross each other.

The thin slurry from the outlets marked (7) belonging to the three-outlet separator (2), which is discharged through the pipes marked (14) and outlets marked (19), can be transported to another two-outset separator (22), connected to the three-outlet one, as can be seen in figure 10, so that the volumes that come out of the outlets marked (19) are distributed by means of the distributors (23), similar to those in (11), between the cells of the two-outlet separator (22). In figure 10, the outlet from separator (22) for concentrated slurry is marked with (24) and the outlet for clear water with (25).

The slant of the plates in this second separator may be less than 60°, as the clear water that is separated runs well upwards and the concentrated slurry that goes downwards also runs well, even with slopes of 10°; but such low slopes cannot be used in order to avoid an excess of occupied surface, with the most suitable slope being between 45° and 60° with respect to horizontal.

As the volume of this second separator is relatively large, in fixed installations it can be made of reinforced concrete and buried, or partially buried, and in mobile installations it can be made of metal or other materials, and put on wheels or trolleys, or float nearly submerged.

The discharge of the clear water is similar to that of the three-outlet separator, and the discharge of the concentrated slurry may be by pump, by siphon, or upwards pipe, or directly through the bottom in the case of a separator floating in a river or lake.

The same three-outlet separator (2) that was previously described, but without the upper outlet (18) for clear water, may be used to advantage to clarify the water that comes from the basins and other waste water from the installation, to return them to public channels or recover them for the cycle, in which case the turbid water would come in from above, indiscriminately, and clear water would come out through the higher outlet and pipes (14) of the figures, while the sediments would come out through the lowest outlets (7). The advantage of this application is in the ease of entry from above, in the nearly parallel routes downwards, and in the fact that the sediments do not mix with the intake water. For this application, the relative height of the plates can be less, or their width greater, which makes it more similar to the classic transverse-flow separator but without reaching the orthogonal movement of water and particles, but rather keeping the flows mostly undivergent.

The special slanted position of the plates (a-b) that make up the cells (5) causes an area delimited on the bottom by the line that is marked as (26) in figure 1 to be established in their upper area, near outlet (9) for the first fraction; this corresponds to the imaginary upper surface of the slurry, over which there is exclusively water that is more or less clear, in other words, as the raw material reaches the settling unit or separator (2), the extraction of the 1^{st} fraction, the water, takes place automatically, because of its lower density, and comes out through outlet (9), obviously lower than the intake pipe (11), as can be seen, for example, by looking at figure 8; and under this delimiting plane (26) the gold and heavy particles tend to gather on the lower edge area of the cells (5), and the slurry on the upper edge area of said cells, specifically and respectively on the right and left parts of figure 2, so that said heavier products arrive at the bottom outlet (7), and through it reach the hopper (20), while the slurry reaches the collector pipe (14) through the holes (15), and from this pipe goes out through outlet (19) which is in turn, although still elevated, noticeably lower than outlet (18), as can also be seen in figure 8.

## Claims

1. Method for separating particles of gold and other materials with high sedimentation rates, contained in clays, soils and slurry, wherein the raw material, duly ground up, is dissolved in as much water as is necessary to have a suspension flow that allows relative movement between the particles to be separated, an amount of water between 20 and 160 liters for each kilogram of dry soil; this mixture is made to pass through a separator (2), in which the dissolved product circulates at a suitable speed so that concentration of the particles with a lower sedimentation rate does not impede the vertical route of the particles with a high sedimentation rate, three outlets being established in said separator, one for the heavy particles to be separated, another for the slurry or liquids with particles with low sedimentation rates in suspension, and another for water that is more or less clear or less turbid, the three-outlet separator (2) being structured based on a plurality of plates (a-b), parallel, preferably with a broken or corrugated outline, which form parallelepipedical cells (5), of slight thickness, open on their four edges, elongated, placed at a slant, so that they are supported through one of their vertices on an imaginary horizontal plane, with respect to which they form an angle on the order of 60°, so that said cells (5) receive the dissolved material through the lowest area (6) of their upper end; at the highest area (9) of their upper end the outlet for the fraction consisting of water that is more or less clean is established; at the lowest point (7) of their lower end the outlet for the heaviest particles with a higher sedimentation rate is established; and at the highest point (8) of their lower end the outlet for the slurry is established, in other words, for less heavy particles with a lower sedimentation rate

2. Method for separating particles of gold and other materials with high sedimentation rates, according to 1, **characterized by** the fact that the 2^{nd} fraction, the one corresponding to slurry with particles with low sedimentation rates in suspension, is optionally subjected to a complementary settling or sedimentation phase (3), to obtain high-density slurry (4), and with the removal of water (3.1), which in parallel to the water making up the 3^{rd} fraction (2.1). is fed back into the mixing and dissolving phase of the material (1).

3. Equipment for putting the method of the previous claims into practice, wherein the three-outlet separator (2) is structured based on a plurality of plates (a-b), parallel, preferably with a broken or corrugated outline, which form parallelepipedical cells (5), of slight thickness, open on their four edges, enlongated, placed at a slant, so that are supported through one of their vertices on an imaginary horizontal plane, with respect to which they form an angle on the order of 60°, so that said cells (5) receive the dissolved material through the lowest area (6) of their upper end; at the highest area (9) of their upper end the outlet for the fraction consisting of water that is more or less clean is established; at the lowest point (7) of their lower end the outlet for the heaviest particles with a higher sedimentation rate is established; and at the highest point (8) of their lower end the outlet for the slurry is established, in other words, for less heavy particles with a lower sedimentation rate.

4. Equipment, according to the claim 3, **characterized by** the fact that when the plates (a-b) are flat, they form between themselves a single sedimentation cell, while when said plates have a broken or corrugated outline, they form cells (5) that are interconnected but functionally independent, formed by the curving lines of their outline, having previously planned that in correspondence with the lowest points (6) of the upper end of the plates (a-b), or what is the same, of the cells (5), substantially over them, a pipe (11) for feeding in the product is established, provided over its lower generatrix with a slot or line of holes (12), to allow the product to go out; the product falls slowly through a pair of diffusing plates (13) which are downwardly divergent, and which extend towards the aforementioned lowest points (6) of the upper end of the cells (5), while at the level of the highest points (8) of the lower end of said cells (5) another pipe is established (14), which collects the slurry making up the 2^{nd} fraction. Said slurry reaches the pipe (14) through longitudinal arrangements of holes (15) and this pipe (9) is secured to plates (a-b) through a support (16), with the additional peculiarity that the upper diffusing partitions (13) are of an appropriate length so as to reduce the discharge speed of the mixture from the pipe (11) to a value included between 1.2 and 3 times the speed of descent between plates (a-b). If said plates are corrugated in outline, they have triangular or angular pieces (10) joined to each peak; these pieces are a few millimeters thick, with a vertex that faces upwards, whose bisectrix coincides with the generatrix that joins the outlet for the clearest liquid with the outlet for the most turbid liquid.

5. Equipment, according to the claims 3 and 4, **characterized by** the fact that plates (a-b) are grouped together forming packets or series of cells that are housed within a frame (17), with the aforementioned slope, within which the pipes (11) and (14) that were previously mentioned are housed, with the upper pipe (11) ending in a lateral spout (18), whose height can be regulated for the discharge of the fraction consisting of water that is more or less turbid; said frame (17) finishes on its lower end in an inverted pyramidal hopper (20), where the particles of gold and other separable materials are collected. The hopper is immediately below the outlet pipe (14) for the slurry fraction, which is extended with a rising section that in turn ends in another spout (19), considerably raised but located under the level corresponding to the aforementioned spout (18).

6. Equipment, according to the claims 3 to 5, **characterized by** the fact that the spout (19) for the discharge of the slurry is connected to a second, two-outlet separator (22), similar to the aforementioned separator (2), with which concentrated but still liquid slurry is obtained, which goes out through a lower outlet (24) while the clear water extracted from said slurry is taken out through an upper outlet (25).

7. Equipment, according to the claims 3 to 6 **characterized by** the fact that another separator with plates, similar to separator (2), forms part of it, but with only two outlets, specifically without the upper outlet (9) and without the feeding pipes (11) with the corresponding diffusing plates (13), and which is coupled to outlet (18) of separator (2) and/or to outlet (25) of separator (22), to further clarify the waste water that is fed back in.

## Patentansprüche

1. Methode zur Trennung von Goldpartikeln und anderen sich schnell sedimentierenden Materialien, die in Tonerde, Erdboden und Schlamm vorkommen: hierbei wird das angemessen zerstampfte Rohmaterial mit genügend Wasser vermischt, damit ein Suspensionsfluss zustande kommt, welcher eine relative Bewegung zwischen den zu trennenden Teilen zur Folge hat - zwischen 20 und 160 Liter Wasser pro Kilogramm Trockenmasse; diese Mischung wird durch eine Trennvorrichtung (2) gedrückt, in der sich das Gemisch mit einer angemessenen Geschwindigkeit bewegt, so dass die Konzentration der Partikel mit einer niedrigeren Sedimentationsgeschwindigkeit nicht die vertikale Bewegung der Teile mit einer hohen Sedimentationsgeschwindigkeit blockiert; ebenso zeichnet sich die Methode dadurch aus, dass die Trennvorrichtung über drei Ausgänge verfügt: einen für die schweren zu trennenden Partikel, einen anderen fiir den Schlamm oder für die Flüssigkeit, welche Partikel mit niedriger Sedimentationsgeschwindigkeit enthält, und einen dritten für das mehr oder weniger klare oder getrübte Wasser; der Aufbau der Trennvorrichtung mit drei Ausgängen (2) besteht aus mehreren parallelen Platten (a-b), vorzugsweise mit einem zacken- oder wellenförmigen Grundriss, welche parallelepipedikale Zellen (5) geringer Stärke bilden, die länglich und an ihren vier Seiten offen sind, welche so auf einer Schrägfläche angebracht sind, dass sie von einem ihrer Eckpunkte auf einer imaginären horizontalen Ebene gestützt werden, mit der sie einen 60°-Winkel bilden, wodurch die oben genannten Zellen (5) die Mischung am niedrigst gelegenen Punkt (6) ihres oberen Endes empfangen; an der am höchsten gelegenen Stelle (9) ihres oberen Endes befindet sich der Ausgang fiir den aus mehr oder weniger klarem Wasser bestehenden Teil, während sich an der am niedrigsten gelegenen Stelle ihres unteren Endes sich der Ausgang für die schwersten Partikel mit der höchsten Sedimentationsrate befindet, und am höchstgelegenen Punkt (8) ihres unteren Endes der Ausgang für den Schlamm, d.h. für die weniger schweren Partikel mit einer niedrigeren Sedimentationsrate.

2. Methode zur Trennung von Goldpartikeln und anderen sich schnell sedimentierenden Materialien gemäss Forderung 1. mit dem Unterschied, dass der 2. Teil, und zwar der Schlamm mit den Partikeln niedriger Sedimentationsgeschwindigkeit, einer weiteren Sedimentationsphase (3) unterworfen werden kann, wodurch man Schlamm mit hoher Dichte (4) und Wasser (3.1) erhält, welches parallel zum Wasser, das nach oben hin zum 3. Teil gebracht worden. ist (2.1), zum Gemisch und zur Materialvorbereitung zurückgebracht wird (1).

3. Einrichtung zur Bewerkstelligung der oben genannten Methode, in der der Aufbau der Trennvorrichtung mit drei Ausgängen (2) aus mehreren parallelen Platten (a-b) besteht, die vorzugsweise einen zacken- oder wellenförmigen Grundriss besitzen und welche parallelepipedikale Zellen (5) geringer Stärke bilden, an ihren vier Seiten offen und länglich sind; diese sind so auf einer Schrägfläche angebracht, dass sie von einem ihrer Eckpunkte auf einer imaginären horizontalen Ebene gestützt werden, mit der sie einen 60°-Winkel bilden, wodurch die oben genannten Zellen (5) die Mischung am niedrigst gelegenen Punkt (6) ihres oberen Endes empfangen; an der am höchsten gelegenen Stelle (9) ihres oberen Endes befindet sich der Ausgang für den aus mehr oder weniger klarem Wasser bestehende Teil, an der am niedrigsten gelegenen Stelle (7) ihres unteren Endes befindet sich der Ausgang für die schwersten Partikel, welche eine höhere Sedimentationsgeschwindigkeit besitzen, und am. höchstgelegenen Punkt (8) ihres unteren Endes befindet sich der Ausgang für den Schlamm, d.h. für die weniger schweren Partikel mit einer niedrigeren Sedimentationsrate.

4. Einrichtung fiir die 3. Forderung: sie zeichnet sich dadurch aus, dass die Platten (a-b) untereinander eine einfache Sedimentationszelle bilden, wenn sie flach sind; wenn die Platten jedoch einen zacken- oder wellenförmigen Grundriss besitzen, bilden sie miteinander verbundene Zellen (5), die allerdings unabhängig voneinander funktionieren und welche durch die kurvenförmigen Linien ihrer Kontur gebildet werden; zuvor wurde diese so angelegt, dass ein Rohr (11) zur Zufuhr des Produktes angebracht wird, und zwar übereinstimmend mit den niedrigsten Punkten (6) des oberen Endes der Platten (a-b), d.h. über den Zellen (5); dieses Rohr hat den Zweck, das Produkt auf der niedrigsten Kante durch eine Reihe von Öffnungen (12) hinausfliessen zu lassen: das Produkt fällt langsam von oben nach unten zwischen einem Paar diffuser Platten (13) hindurch, welche sind nach unten hin divergieren und sich zu den niedrigsten oben genannten, sich an den oberen Enden der Zellen (5) befindenden Punkten (6) hin verlängern; auf der Ebene der am höchsten gelegenen Punkte (8) des unteren Endes der Zellen (5) hingegen befindet sich eine weitere Röhre (14), welche den zusammengestzten Schlamm des zweiten Teils auffängt, der dann zur Röhre (14) gelangt, welche mit einer Reihe von Öffnungen (15) versehen ist und auf welcher (9) die Platten (a-b) durch eine Stütze (16) auf sitzen, und zwar mit der Besonderheit, dass die oberen Verteilungsteile (13) eine derart angemessene Länge besitzen, so dass sie die Ausflussgeschwindigkeit der Mischung aus der Röhre (11) auf einen Wert reduzieren, welcher zwischen 1, 2 und 3mal der Abflussgeschwindigkeit zwischen den Platten (a-b) entspricht; im Fall, dass das Profil der Platten wellenförmig ist, werden bei diesen dreieckige oder eckige Stücke (10) an jeder Spitze angebracht, die einige Millimeter dick sind und einen Winkel besitzen, in welchem der Scheitel mit derjenigen Kante übereinstimmt, die den Auslasskanal für die klarste Flüssigkeit mit demjenigen der trübsten Flüssigkeit verbindet.

5. Einrichtung für die 3. und 4. Forderung: sie zeichnet sich dadurch aus, dass diese Platten (a-b) zusammengruppiert sind, so dass sie Päckchen oder Zellreihen bilden, welche sich innerhalb eines Rahmens (17) mit der oben genannten Neigung befinden, in welchen sich zudem sich die zuvor genannten Röhren (11) und (14) befinden; die obere Röhre (11) endet in einem seitlichen Ausfluss (18), wessen Höhe für einen mehr oder weniger klaren Ausfluss des Wasserteils reguliert werden kann; dieser Rahmen (17) endet bei seinem unteren Ende auf einem umgekehrt pyramideförmigen Trichter (20), wo die Goldpartikel und Partikel anderer Materialien angesammelt werden und welcher sich sich unmittelbar unterhalb der Ausflussrohre (14) für den Schlammteil befindet; diese Röhren verlängern sich sich mit einem aufsteigenden Teil, der seinerseits an einer ziemlich hohen Röhre (19) endet, die jedoch auf einem niedrigeren Niveau als die oben genannte Röhre (18) liegt.

6. Einrichtung fiir die 3. bis 5. Forderung: sie zeichnet sich dadurch aus, dass die Röhre (19) für den Schlammabfluss an einer zweiten Trennvorrichtung mit zwei Ausgängen (22) angeschlossen ist, ähnlich wie die oben genannte Trennvorrichtung (2), mit welcher man den am stärksten konzentrierten Schlamm erhält, welcher aus einem unteren Ausgang (24) herausfliesst, während das klare Wasser, das aus diesem Schlamm gewonnen wird, aus einem oberen Ausgang (25) herausfliesst.

7. Einrichtung für die 3. bis 6. Forderung: sie zeichnet sich dadurch aus, dass eine weitere Trennvorrichtung mit Platten ähnlich wie bei Trennvorrichtung (2) eingebaut ist, welche jedoch nur zwei Ausgänge und keinen oberen Ausgang (9) sowie keine Zuflussröhren (11) mit den dazugehörigen diffundierenden Platten (13) besitzt und ausserdem mit dem Ausgang (18) der Trennvorrichtung (2) und/ oder dem Ausgang (25) der Trennvorrichtung (22) verbunden ist, damit das dort angesammelte Abwasser noch besser geklärt wird.

## Revendications

1. Méthode pour séparer des particules d'or et d'autres matériaux à haute vitesse de sédimentation, contenues dans les argiles, les sols et les boues, **caractérisée** parce que la matière première dûment concassée est mélangée avec la quantité d'eau nécessaire pour atteindre un débit de suspension qui permet le mouvement relatif entre les particules à séparer, une quantité d'eau entre 20 et 160 litres par kilogramme de matière seche ; on fait passer ce mélange à travers un séparateur (2) dans lequel le produit mélangé circule à une vitesse appropiée afin que la concentration des particules à une vitesse de sédimentation inférieure ne bloque pas le parcours vertical des particules à haute vitesse de sédimentation ; de même la méthode se **caractérise par le fait que** le séparateur dispose de trois sorties, l'une pour les particules lourdes à séparer, l'autre pour la boue ou les liquides contenant des particules en suspension à basse vitesse de sédimentation, et la dernière pour l'eau qui est plus ou moins claire ou trouble ; la structure du séparateur à trois sorties (2) étant constituée de plusieurs planches (a-b), parallèles, de préférence avec un contour cassé ou ondulé formant des cellules parallélépipèdes (5) peu épaisses ouvertes sur leurs quatre bords, allongées, placées sur une pente de telle sorte qu'elles soient supportées par un de leurs sommets sur un plan horizontal imaginaire, par rapport auquel elles forment un angle de 60° afin que les cellules ci-dessus mentionnées (5) reçoivent le mélange à l'endroit le plus bas (6) de leur extrémité supérieure ; à l'endroit le plus élévé (9) de leur extrémité la plus haute se trouve la sortie pour la fraction composée d'eau plus ou moins claire ; au point le plus bas de leur extrémité inférieure se trouve la sortie pour les particules les plus lourdes à la vitesse de sédimentation plus élévée; et au point le moins bas (8) de leur extrémité inférieure se trouve la sortie pour la boue, c'est-à-dire pour les particules moins lourdes de vitesse de sédimentation plus basse.

2. Méthode pour séparer des particules d'or et d'autres matériaux à haute vitesse de sédimentation correspondant à la revendication 1, **caractérisée par le fait que** la 2ème fraction, celle correspondant à la boue aux particules à de basse vitesse de sédimentation en suspension, peut être soumise à une phase complémentaire de sédimentation (3) afin d'obtenir de la boue à haute densité (4), et de l'eau (3.1) qui parallelèment à l'eau déplacée vers le haut de la 3ème fraction (2.1) est retournée au malaxage et à la préparation du matériel (1).

3. Équipement pour mettre en oeuvre la méthode des revendications précédentes dans lequel la structure du séparateur à trois sorties (2) est constituée de plusieurs planches (a-b), parallèles, de préférence avec un contour cassé ou ondulé formant des cellules parallélépipèdes (5) peu épaisses ouvertes sur leurs quatre bords, allongées, placées sur une pente de telle sorte qu'elles sont supportées par un de leurs sommets sur un plan horizontal imaginaire, par rapport auquel elles forment un angle de 60° afin que les cellules ci-dessus mentionnées (5) reçoivent le mélange à l'endroit de la partie la plus basse (6) de leur extrémité supérieure; à l'endroit de la partie la plus élévée (9) de leur extrémité supérieure se trouve la sortie pour la fraction composée d'eau plus ou moins claire ; au point le plus bas (7) de leur extrémité inférieure se trouve la sortie pour les particules les plus lourdes de vitesse de sédimentation plus élévée ; et au point le moins bas (8) de leur extrémité inférieure se trouve la sortie pour la boue, c'est-à-dire pour les particules moins lourdes de vitesse de sédimentation plus basse.

4. Équipement correspondant à la 3^{ème} revendication, **caractérisé par le fait que** lorsque les planches (a-b) sont plates elles forment entre elles une cellule de sédimentation simple, tandis que lorsque les planches ont un contour cassé ou ondulé, elles forment des cellules (5) interconnectées mais fonctionnellement indépendantes, formées par les lignes courbes de leur contour préalablement conçu que en correspondance avec les points les plus bas (6) de l'extrémité supérieure des planches (a-b) c'est-à-dire, des cellules (5) sur lesquelles un tuyau (11) est établi afin de fournir le produit dans la génératrice la plus basse à travers une file d'orifices (12, pour permettre au produit de sortir ; le produit tombe ralenti entre une paire de planches diffusantes (13) divergeantes de haut en bas, se prolongeant vers les points les plus bas (6) ci-dessus mentionnés de l'extrémité supérieure des cellules (5), tandis qu'au niveau des points les plus élévés (8) de l'extrémité inférieure de ces cellules (5) se trouve un autre tuyau (14) que ramasse la boue composée de la deuxième fraction ; cette boue atteint le tuyau (14) pourvu d'une ligne d'orifices (15) et sur ce tuyau (9) reposent les planches (a-b) à travers d'un appui (16) ; avec la particularité additionnelle que les divisions de diffusion supérieures (13) ont une longueur adéquate afin de réduire la vitesse de décharge du mélange du tuyau (11) à une valeur oscillant entre 1, 2 et 3 fois la vitesse de descente entre les planches (a-b). Au cas où le profil des planches soit ondulé elles auront des pièces triangulaires ou angulaires (10) jointes à chaque sommet ; ces pièces ont une épaisseur de quelques millimètres, avec un angle dont la bissectrice coïncide avec la génératrice rassemblant la sortie pour le liquide les plus clair avec la sortie pour le liquide le plus trouble.

5. Équipement correspondant à la 3^{ème} et 4^{ème} revendication, **caractérisé par le fait que** ces planches (a-b) se trouvent groupées ensemble formant des entassements ou des séries de cellules logées dans un encadrement (17) avec la pente ci-dessus mentionnée, dans lequel se trouvent les tuyaux (11) et (14) qui ont été précedemment mentionnées, avec le tuyau supérieur (11) terminant vers un déversoir latéral (18) dont la hauteur peut être réglée pour la décharge de la fraction composée d'eau plus ou moins claire ; le dit encadrement (17) termine dans son extrémité inférieure sur une trémie pyramidale inversée (20) où sont rassemblées les particules d'or et d'autres matériaux ; cette trémie se trouve immédiatement au-dessous des tuyaux de sortie (14) pour la fraction de boue ; des tuyaux qui se prolongent avec une partie ascendante aboutissant à son tour sur un tuyau (19) considérablement levé, mais placé à un niveau plus bas que celui du déversoir mentionné ci-dessus (18).

6. Équipement correspondant de la 3^{ème} jusqu'à la 5^{ème} revendication, **caractérisé par le fait que** le tuyau (19) pour la décharge de la boue est connecté à un deuxième séparateur à deux sorties (22) similaire au séparateur auparavant mentionné (2) avec lequel s'obtient la boue plus concentrée sortant par une sortie inférieure (24), tandis que l'eau claire extraite à partir de cette boue sort par une sortie supérieure (25).

7. Équipement correspondant de la 3^{ème} jusqu'à la 6^{ème} revendication, **caractérisé par le fait qu'**un autre séparateur aux planches semblables au séparateur (2) en fait partie, mais ne présentant que deux sorties en particulier sans sortie supérieure (9) et sans tuyaux d'alimentation (11) avec les correspondantes planches diffusantes (13) ; et qui se trouve couplé à la sortie (18) du séparater (2) et/ou à la sortie (25) du séparateur (22) pour clarifier encore mieux les eaux des égouts qui y ont été déposées.
